# EUROPÄISCHE PATENTANMELDUNG

(11) **EP 4 806 634 A1**
(43) Veröffentlichungstag der Anmeldung: **16.09.2026**
(21) Anmeldenummer: 25163229.5
(22) Anmeldetag: 12.03.2025
(51) Int. Cl.: B32B 17/10, B60J 1/00

(54) **VERBUNDSCHEIBE MIT ELEKTRISCH SCHALTBAREM SPIEGELELEMENT UND AEROGEL-LAGE**

(71) Anmelder: Saint-Gobain Sekurit France, 60150 Thourotte (FR)
(72) Erfinder: ZILLER, Marine, 52134 Herzogenrath (DE); ARENDT, Sebastian, 52134 Herzogenrath (DE); MEMAR JAVID, Siyamak, 52134 Herzogenrath (DE); MOTEMANI SHARABIANI, Yahya, 52134 Herzogenrath (DE)
(74) Vertreter: SGR Germany-Patents

(57) **Zusammenfassung**

Die vorliegende Erfindung betrifft eine Verbundscheibe zur Abtrennung eines Innenraums von einer äußeren Umgebung, umfassend in der nachfolgend angegebenen Reihenfolge:
- eine Außenscheibe (1) mit einer außenseitigen Oberfläche (I) und einer innenraumseitigen Oberfläche (II),
- eine erste Verbindungsschicht (5),
- eine Aerogel-Lage (4),
- eine zweite Verbindungsschicht (6),
- ein elektrisch schaltbares Spiegelelement (3), und
- eine Innenscheibe (2) mit einer außenseitigen Oberfläche (III) und einer innenraumseitigen Oberfläche (IV).

## Beschreibung

Die Erfindung betrifft eine Verbundscheibe, die mit einem elektrisch schaltbaren Spiegelelement und einer Aerogel-Lage ausgestattet ist.

Verglasungen von Gebäuden oder Fahrzeugen dienen dazu, den Personen im Innenraum eine Durchsicht zur äußeren Umgebung zu ermöglichen sowie den Lichteinfall von außen in den Innenraum zu gewährleisten. Verglasungen stellen aber stets eine Herausforderung für den thermischen Komfort im Innenraum dar - im Sommer erwärmt sich der Innenraum über die Verglasung von außen nach innen, im Winter kühlt der Innenraum über die Verglasung aus, jeweils insbesondere durch Wärmestrahlung und Wärmeleitung. Die Wärmeübertragung macht bei hohen Außentemperaturen den Einsatz von Kühlvorrichtungen wie Klimaanlagen erforderlich und bei niedrigen Außentemperaturen den Einsatz von Heizvorrichtungen. Dadurch wird der Energieverbrauch gesteigert.

Bei Elektrofahrzeugen sind die Folgen eines starken Wärmedurchtritts besonders kritisch, weil durch die Klimaautomatik (Heiz- beziehungsweise Kühlfunktion) der Energieverbrauch gesteigert wird, was zu einer verkürzten Laufzeit bis zum nächsten notwendigen Batterieladevorgang führt. Zudem kann für die Heizung nicht die Abwärme eines Verbrennungsmotors genutzt werden, so dass auch die Heizung elektrisch betrieben werden muss.

Um die Wärmeübertragung über die Verglasung zu reduzieren, ist bekannt, die Verglasung mit transparenten, IR-reflektierenden Beschichtungen zu versehen. So sind Sonnenschutzbeschichtungen (*solar control coatings*) bekannt, welche IR-reflektierende Silberschichten umfassen, um die IR-Anteile der Sonnenstrahlung zu reflektieren. Es sind auch emissivitätsmindernde Beschichtungen (*low E coatings*) bekannt mit reflektierenden Eigenschaften im mittleren IR-Bereich, welche im Sommer die von der erwärmten Scheibe ausgehende Wärmestrahlung reflektieren und im Winter die vom Innenraum ausgehende Wärmestrahlung. Lediglich beispielhaft sei auf WO2019110172A1 verwiesen, wo eine Verbundscheibe offenbart ist mit einer Sonnenschutzbeschichtung (beispielsweise auf der innenraumseitigen Oberfläche der Außenscheibe) und einer emissivitätsmindernden Beschichtung (auf der innenraumseitigen Oberfläche der Innenscheibe).

Ein großer Teil des Energieeintrags wird jedoch nicht durch IR-Strahlung hervorgerufen, sondern durch Strahlung im sichtbaren Spektralbereich. Der Einfall von sichtbarem Licht über die Verglasung kann beispielsweise durch den Einsatz einer getönten Verglasung reduziert werden, welche die Lichttransmission statisch herabsetzt. Es sind auch Verglasungen bekannt, bei denen die Lichttransmission dynamisch angepasst werden kann. Solche Verglasungen sind insbesondere mit einem Funktionselement mit elektrisch steuerbaren optischen Eigenschaften versehen.

Die optischen Eigenschaften solcher Funktionselemente können durch eine angelegte elektrische Spannung verändert werden. Das Anlegen der elektrischen Spannung erfolgt über eine Steuereinheit, welche an zwei Flächenelektroden des Funktionselements angeschlossen ist, zwischen denen sich die aktive Schicht oder das aktive Schichtsystem des Funktionselements befindet. Ein Beispiel für solche Funktionselemente sind SPD-Funktionselemente (*suspended particle device*), die beispielsweise aus EP0876608B1 und WO2011033313A1 bekannt sind. Ein weiteres Beispiel sind PDLC-Funktionselemente (*polymer dispersed liquid crystal*)*,* die beispielsweise aus DE102008026339A1 bekannt sind. Außerdem sind elektrochrome Funktionselemente bekannt, beispielsweise aus US20120026573A1, WO2010147494A1 und EP1862849A1 und WO2012007334A1. Diese Funktionselemente weisen jedoch den Nachteil auf, dass sie im nicht transparenten Zustand stark lichtabsorbierend sind, insbesondere wenn dieser nicht transparente Zustand stark dunkel getönt ist (wie bei SPD- oder elektrochromen Funktionselementen oder sogenannten "Guest-Host"-Funktionselementen auf Flüssigkristallbasis). Die starke Absorption erhöht die Emissivität der Verbundscheibe, also die von ihr ausgehende Wärmestrahlung, was sich negativ auf den thermischen Komfort im Innenraum auswirkt.

Für eine Verbesserung der lichtreflektierenden Eigenschaft von Verbundscheiben wäre auch die Verwendung von elektrisch schaltbaren, lichtreflektierenden Funktionsfolien möglich. DE1596815A1, JP2006106343A, JP2006267670A und WO2024223925A1 zeigen jeweils eine Verbundscheibe mit einem elektrisch schaltbaren Spiegelelement.

Die bisher beschriebenen Verglasungen reduzieren jedoch nur denjenigen Anteil der Wärmeübertragung, welcher auf Wärmestrahlung zurückgeht.

Aerogele sind hochporöse Festkörper, welche sich bekanntermaßen durch eine sehr geringe thermische Leitfähigkeit und wärmedämmende Eigenschaften auszeichnen. Aus WO2012154602A1 ist eine Isolierverglasung mit Aerogel-Lage bekannt. Aus US2010146880A1 ist eine Gebäude-Dachscheibe bekannt aus zwei Glasscheiben und einer dazwischenliegenden Aerogel-Lage. EP3381881A1 offenbart eine Verbundscheibe aus zwei Glasscheiben und einer dazwischenliegenden thermisch isolierenden Schicht, die als Aerogel-Lage ausgebildet sein kann. US20180264784A1 offenbart eine Verbundscheibe mit einer Wärmeisolationsschicht. US20140065329A1 offenbart eine Isolierverglasungseinheit mit einer nanotechnologisch verbesserten Folie für eine verbesserte Isolierfähigkeit. In US9228352B2 ist Oberlichtanordnung offenbart, welche mit einer Verglasungseinheit ausgestattet ist, die Licht durchlässt und gleichzeitig die Wärmeübertragung begrenzt. Die Verglasungseinheit weist eine voneinander beabstandete Ober- und Unterschicht auf, die einen geschlossenen Hohlraum bildet, der zumindest teilweise mit lichtdurchlässigen Isolierpartikeln gefüllt ist. WO2024193919A1 offenbart eine photovoltaische Verbundscheibe mit einer Aerogel-Lage.

Der vorliegenden Erfindung liegt die Aufgabe zugrunde, eine verbesserte Verbundscheibe mit vermindertem Wärmedurchtritt, besserer Wärmeisolationswirkung und besserer akustischer Isolationswirkung bereitzustellen. Außerdem soll die Verbundscheibe hochqualitativ und langzeitstabil sein.

Die Aufgabe wird erfindungsgemäß gelöst durch eine Verbundscheibe gemäß dem unabhängigen Anspruch 1. Vorteilhafte Ausgestaltungen gehen aus der Unteransprüchen hervor.

Die Erfindung betrifft eine Verbundscheibe, die zum Einbau in eine Öffnung eines Fahrzeugs oder Gebäudes vorgesehen ist und zur Abtrennung eines Innenraums von einer äußeren Umgebung dient.

Die erfindungsgemäße Verbundscheibe umfasst eine Außenscheibe und eine Innenscheibe, die über Verbindungsschichten flächig miteinander verbunden sind. Die Verbundscheibe weist ein elektrisch schaltbares Spiegelelement auf, welches zwischen der Außenscheibe und der Innenscheibe angeordnet ist. Zwischen der Außenscheibe und dem elektrisch schaltbaren Spiegelelement ist außerdem eine Aerogel-Lage angeordnet. Zwischen der Außenscheibe und der Aerogel-Lage ist eine erste Verbindungsschicht angeordnet. Zwischen der Aerogel-Lage und dem elektrisch schaltbaren Spiegelelement ist eine zweite Verbindungsschicht angeordnet.

Mit Innenscheibe wird im Sinne der Erfindung die dem Innenraum zugewandte Scheibe der Verbundscheibe bezeichnet. Mit Außenscheibe wird die der äußeren Umgebung zugewandte Scheibe bezeichnet.

Die Außenscheibe und die Innenscheibe weisen jeweils eine außenseitige Oberfläche und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein.

Die außenseitige Oberfläche der Außenscheibe wird als Seite I bezeichnet. Die innenraumseitige Oberfläche der Außenscheibe wird als Seite II bezeichnet. Die außenseitige Oberfläche der Innenscheibe wird als Seite III bezeichnet. Die innenraumseitige Oberfläche der Innenscheibe wird als Seite IV bezeichnet.

Die innenraumseitige Oberfläche der Außenscheibe und die außenseitige Oberfläche der Innenscheibe sind in der Verbundscheibe einander zugewandt beziehungsweise aufeinander gerichtet und miteinander verbunden (flächige Verbindung). Die außenseitige Oberfläche der Außenscheibe und die innenraumseitige Oberfläche der Innenscheibe sind voneinander abgewandt. Die Außenscheibe und die Innenscheibe sind bevorzugt im Wesentlichen parallel zueinander angeordnet.

Die erfindungsgemäße Verbundscheibe zur Abtrennung eines Innenraums von einer äußeren Umgebung umfasst somit erfindungsgemäß in der nachfolgend angegeben Reihenfolge:
- eine Außenscheibe mit einer außenseitigen Oberfläche und einer innenraumseitigen Oberfläche,
- eine erste Verbindungsschicht,
- eine Aerogel-Lage,
- eine zweite Verbindungsschicht,
- ein elektrisch schaltbares Spiegelelement, und
- eine Innenscheibe mit einer außenseitigen Oberfläche und einer innenraumseitigen Oberfläche.

Das elektrisch schaltbare Spiegelelement kann von einem transparenten Zustand in einen spiegelnden Zustand geschaltet werden. Im spiegelnden Zustand wird das von außen einfallende Licht (zumindest teilweise beziehungsweise größtenteils) reflektiert, gelangt somit nicht in den Innenraum und kann dort nicht zur Erwärmung beitragen. Ist ein Erwärmen des Innenraums durch sichtbares Licht erwünscht, beispielsweise bei geringen Außentemperaturen, kann das Spiegelelement in den nicht spiegelnden, transparenten Zustand geschaltet werden. Der Nutzer kann die Wärmeübertragung aufgrund von sichtbarem Licht also aktiv einstellen und somit flexibel auf die äußeren Umstände reagieren. Im Gegensatz zu anderen Funktionselementen mit elektrisch steuerbaren optischen Eigenschaften, welche vornehmlich über eine Änderung der Lichtabsorption oder der Lichtstreuung auf die Lichttransmission wirken (wie beispielsweise SPD-, PDLC oder elektrochrome Funktionselemente) weist das Spiegelelement im nicht-transparenten Zustand keine signifikante Lichtabsorption auf, die dann zu einer erhöhten Emissivität (Wärmeabstrahlung) der Verbundscheibe führen würde. Das Spiegelelement weist außerdem eine vergleichsweise kurze "Schaltzeit" (Übergangszeit zwischen den Zuständen) auf und eine lange Lebensdauer.

Die Verbundscheibe weist wie oben beschrieben außerdem eine Aerogel-Lage auf. Die Aerogel-Lage versieht die Verbundscheibe mit wärmedämmenden Eigenschaften und reduziert die Wärmeübertragung aufgrund von Wärmeleitung. Die Aerogel-Lage ist außenseitig zum elektrisch schaltbaren Spiegelelement angeordnet, so dass das Spiegelelement bei hohen Außentemperaturen durch die Aerogel-Lage vor einer übermäßigen Erwärmung geschützt wird, welche das schaltbare Spiegelelement schädigen könnte. Die Aerogel-Lage verringert also nicht nur die Wärmeleitung zwischen Innenraum und äußerer Umgebung über die Verbundscheibe, sondern schützt gleichzeitig auch das elektrisch steuerbare Spiegelelement vor thermischer Überlastung. Die Aerogel-Lage wirkt außerdem akustisch isolierend, so dass störende Außengeräusche weniger stark in den Innenraum gelangen und auf die Verwendung kostspieliger, sogenannter akustischer thermoplastischer Folien verzichtet werden kann. Das sind große Vorteile der vorliegenden Erfindung.

Das elektrisch schaltbare Spiegelelement ist wie oben beschrieben zwischen der zweiten Verbindungsschicht und der Innenscheibe angeordnet. Dabei kann das Spiegelelement mit der Innenscheibe in Kontakt stehen oder von dieser beabstandet sein.

In einer ersten bevorzugten Ausgestaltung der Erfindung ist das elektrisch schaltbare Spiegelelement als Beschichtung ausgebildet und auf der außenseitigen Oberfläche der Innenscheibe angeordnet.

In der ersten bevorzugten Ausgestaltung der Erfindung umfasst die Verbundscheibe zur Abtrennung eines Innenraums von einer äußeren Umgebung somit in der angegebenen Reihenfolge:
- eine Außenscheibe mit einer außenseitigen Oberfläche und einer innenraumseitigen Oberfläche,
- eine erste Verbindungsschicht,
- eine Aerogel-Lage,
- eine zweite Verbindungsschicht, und
- eine Innenscheibe mit einer außenseitigen Oberfläche und einer innenraumseitigen Oberfläche und einem elektrisch schaltbaren Spiegelelement als Beschichtung auf ihrer außenseitigen Oberfläche.

In einer zweiten bevorzugten Ausgestaltung der Erfindung ist das elektrisch schaltbare Spiegelelement als Folie ausgebildet und zwischen dem elektrisch schaltbaren Spiegelelement und der Innenscheibe ist eine dritte Verbindungsschicht angeordnet.

In der zweiten bevorzugten Ausgestaltung der Erfindung umfasst die Verbundscheibe zur Abtrennung eines Innenraums von einer äußeren Umgebung somit in der angegebenen Reihenfolge:
- eine Außenscheibe mit einer außenseitigen Oberfläche und einer innenraumseitigen Oberfläche,
- eine erste Verbindungsschicht,
- eine Aerogel-Lage,
- eine zweite Verbindungsschicht,
- ein elektrisch schaltbares Spiegelelement,
- eine dritte Verbindungsschicht und
- eine Innenscheibe mit einer außenseitigen Oberfläche und einer innenraumseitigen Oberfläche.

In besonders bevorzugten Ausgestaltungen besteht die Verbundscheibe strukturell jeweils nur aus den angegebenen Elementen. Die Außenscheibe, die Innenscheibe und/oder die

Verbindungschicht(en) können darüber hinaus mit fachüblichen Beschichtungen oder Aufdrucken ausgestattet sein.

Anders als der Name zunächst vermuten lässt sind Aerogele keine Gele, sondern hochporöse Festkörper. Der Name rührt daher, dass Aerogele typischerweise aus Gelen hergestellt werden, wobei die flüssige Komponente des Gels durch ein Gas ersetzt wird, ohne dass die Gelstruktur kollabiert, beispielsweise durch superkritische Trocknung oder Gefriertrocknung. Aerogele bestehen strukturell aus einer Verästelung von Partikelketten (dendritische Struktur) mit sehr vielen Zwischenräumen (Poren), insbesondere in Form offener Poren. Die Partikelketten weisen Kontaktstellen zueinander auf, so dass das Aerogel als stabiles, schwammartiges Netz aufgefasst werden kann. Die Partikelketten selbst ergeben sich häufig durch die Fusion von beispielsweise sphärischen Partikeln. Ein sehr hoher Volumenanteil der Aerogele besteht aus Poren, insbesondere offenen Poren. Daher weisen Aerogele eine sehr geringe Dichte auf. Die erfindungsgemäße Aerogel-Lage hat daher ein geringes Gewicht, so dass das Gewicht der Verbundscheibe selbst durch vergleichsweise dicke Aerogel-Lagen nicht wesentlich erhöht wird. Aerogele können darüber hinaus eine hohe optische Transparenz aufweisen, was für Anwendungen in Verglasungen besonders vorteilhaft sein kann. Aerogele können beispielsweise durch Sol-Gel-Verfahren hergestellt werden.

Es können Einlagerungen in den Poren vorhanden, beispielsweise um die mechanischen, thermischen oder optischen Eigenschaften der Aerogel-Lage zu beeinflussen. Die Poren sind typischerweise luftgefüllt, abgesehen von etwaigen Einlagerungen. Die erfindungsgemäße Aerogel-Lage kann auch Aerogel-Schicht bezeichnet werden oder als Lage oder Schicht aus einem Aerogel, auf Basis eines Aerogels oder enthaltend ein Aerogel.

Unter der Porosität wird im Sinne der Erfindung der Anteil des Volumens der Poren am Gesamtvolumen des Aerogels bezeichnet. Die erfindungsgemäße Aerogel-Lage ist bevorzugt aus einem Aerogel beziehungsweise auf Basis eines Aerogels ausgebildet, welches eine Porosität von 50% bis 99,98% aufweist, besonders bevorzugt von 80% bis 99%, ganz besonders bevorzugt von 85% bis 98 Die Porosität kann durch Gassorptionsmessung mit Stickstoff als Messgas bestimmt werden, insbesondere mit Kohlendioxid (CO₂) als Messgas bei einer Temperatur von 273 K.

Die Porengröße des Aerogels beträgt bevorzugt von 1 nm bis 50 nm, besonders bevorzugt von 10 nm bis 40 nm. Damit ist insbesondere der Durchmesser der typischerweise näherungsweise kugelförmigen Poren gemeint. Auch die Porengröße kann mit der besagten Gassorptionsmessung bestimmt werden.

Die Dichte des Aerogels beträgt bevorzugt von 0,16 mg/cm³ bis 500 mg/cm³, besonders bevorzugt von 10 mg/cm³ bis 300 mg/cm³. Damit ist die Rohdichte gemeint basierend auf dem Volumen einschließlich der Porenräume, wobei die Luft in den Poren nicht in die Masse eingerechnet wird.

Die Partikel, welches das Netzwerk an Partikelketten aufbauen, weisen typischerweise eine Größe von 1 nm bis 10 nm auf.

Aerogele können aus verschiedenen Materialien gebildet werden (Material der Partikelketten). Das Aerogel der erfindungsgemäßen Aerogel-Lage ist bevorzugt aus Silikat, aus einem Polymer, aus Kohlenstoff, aus Cellulose oder aus einem Metalloxid ausgebildet. Grundsätzlich sind sämtliche Polymere und Metalloxide geeignet. Beispiele sind Polyimid für ein Polymer und Aluminiumoxid, Titanoxid, Zirkoniumoxid (alle transparent und weiß oder bläulich), Eisenoxid (opak, rot oder gelb), Chromoxid (opak, grün oder blau) und Vanadiumoxid (opak, olivgrün) für Metalloxide. Silikat-Aerosole besitzen streng genommen nicht die chemische Zusammensetzung eines Silikats, sondern etwa SiO(OH)_{y}(OR)_{z}, wobei R ein organischer Rest ist und die Parameter y und z vom Herstellungsprozess abhängig sind. Sie werden dennoch allgemein derart bezeichnet und der Ausdruck Silikat auch im Rahmen der vorliegenden Erfindung entsprechend benutzt. Im Englischen ist auch die Bezeichnung "silica aerogel" gebräuchlich (also SiO₂-Aerogel). Für die erfindungsgemäße Aerogel-Lage sind Silikat-Aerogele, Polymer-Aerogele und Cellulose-Aerogele besonders bevorzugt. Diese Aerogele sind gut erforscht und bereits in großer Zahl kommerziell erhältlich. Die Aerogel-Lage ist somit in einer bevorzugten Ausführungsform auf Basis eines Silikat-Aerogels, Polymer-Aerogels oder Cellulose-Aerogels ausgebildet.

Die Aerogel-Lage kann strukturell unterschiedlich ausgebildet sein und in die Verbundscheibe integriert werden, insbesondere
- als sogenanntes Blanket ("Decke"); darunter wird ein Verbundwerkstoff verstanden aus einem Aerogel (insbesondere Silikat-Aerogel) und einem Werkstoff, welcher die mechanischen Eigenschaften beeinflusst; der besagte Werkstoff ist insbesondere ein Faser-Werkstoff (beispielsweise Glasfasern); Blankets sind flexibel und können beispielsweise auf Rollen bereitgestellt werden;
- als Matte: darunter wird eine flexible Schicht insbesondere aus reinem Aerogel verstanden; Matten sind flexibel und können ebenfalls beispielsweise auf Rollen bereitgestellt werden; eine solche Matte kann beispielsweise aus einem Aerogel-Filz (insbesondere Silikat-Aerogel-Filz) ausgebildet sein;
- als Folie; Folien sind flexibel und können ebenfalls beispielsweise auf Rollen bereitgestellt werden; sie sind typischerweise aus einem oder auf Basis eines Polymer-Aerogels ausgebildet, welches optional Einlagerungen aufweisen kann;
- als starre Schicht ("Platte");
- in Form von Granulat (mit Partikelgrößen beispielsweise im Millimeter-Bereich) oder Pulver (mit Partikelgrößen beispielsweise im Mikrometer-Bereich); Pulver sind meist opak, während Granulate meist transluzent sind.

Blankets, Matten, Platten und Folien sind an sich formstabil und können in allen Ausgestaltungen eingesetzt werden. Granulate und Pulver sind gleichsam Schüttgut - sie können durch eine Verkapselung in Form einer Aerogel-Lage fixiert werden. Unter einer Verkapselung wird eine (insbesondere polymere) Schicht um die gesamte Oberfläche der Aerogel-Lage verstanden, welche das Granulat beziehungsweise Pulver in Form der Aerogel-Lage fixiert.

Die Verkapselung ist bevorzugt als Polymerschicht ausgebildet. Die Polymerschicht kann beispielsweise auf Basis von Polyethylenterephthalat (PET), Polyvinylchlorid (PVC), Polypropylen (PP) oder Polyethylen (PE) ausgebildet sein. Die Dicke der Polymerschicht beträgt bevorzugt von 10 µm bis 500 µm, besonders bevorzugt von 50 µm bis 200 µm. Damit wird eine gute Schutzwirkung erzielt, ohne dass zu viel Material eingesetzt werden müsste und die Dicke der Aerogel-Lage zu stark erhöht werden würde.

Die Aerogel-Lage weist bevorzugt mindestens die gleiche Fläche auf wie das elektrisch schaltbare Spiegelelement, besonders bevorzugt weist die Aerogel-Lage im Wesentlichen die gleiche Fläche auf wie die Verbundscheibe. Die Aerogel-Lage erstreckt sich dann bis zu den Seitenkanten der Verbundscheibe, beispielsweise der Fahrzeug-Dachscheibe.

Die Dicke der Aerogel-Lage kann den Erfordernissen des konkreten Anwendungsfalls entsprechend gewählt werden. Dabei spielen insbesondere die Wärmeleitfähigkeit des Aerogels (welche wiederum vom Material, Dichte und Porosität abhängig ist), die Wärmeaufnahme der Verbundscheibe (welche wiederum von den übrigen Bestandteilen der Verbundscheibe abhängig ist, insbesondere von Material, Dicke und Tönungsgrad der Außenscheibe, der Innenscheibe und der Verbindungsschichten) sowie der erwünschte Wärmeeintrag (also der gewünschte TTS-Wert, die insgesamt eingestrahlte Sonnenenergie) eine Rolle. Bevorzugt weist die Aerogel-Lage eine Dicke im Bereich von 0,1 mm bis 10 mm auf, besonders bevorzugt von 0,2 mm bis 8 mm, ganz besonders bevorzugt von 0,5 mm bis 6 mm, insbesondere von 1 mm bis 5 mm. Damit werden bei typischen Anwendungen gute Ergebnisse erzielt.

Das elektrisch schaltbare Spiegelelement weist einen transparenten Zustand und einen spiegelnden Zustand auf. In welchem Zustand sich das Spiegelelement befindet kann vom Nutzer elektrisch eingestellt werden, insbesondere durch eine an das Spiegelelement angelegte elektrische Spannung. Im transparenten Zustand weist das Spiegelelement einen geringeren Reflexionsgrad und entsprechend einen höheren Transmissionsgrad auf als im spiegelnden Zustand. Umgekehrt weist das Spiegelelement im spiegelnden Zustand einen höheren Reflexionsgrad und entsprechend einen geringeren Transmissionsgrad auf als im transparenten Zustand.

Im transparenten Zustand beträgt der Reflexionsgrad des Spiegelelements bevorzugt weniger als 20% (besonders bevorzugt weniger als 10%, ganz besonders bevorzugt weniger als 5%). Im spiegelnden Zustand beträgt der Reflexionsgrad des Spiegelelements bevorzugt mehr als 50% (besonders bevorzugt mehr als 70%, ganz besonders bevorzugt mehr als 80%). Damit ist der integrierte Reflexionsgrad gemeint im Spektralbereich von 380 nm bis 780 nm, gemessen unter einem Winkel von 8° (zur Flächennormalen) mit Lichtart A und einem 2°-Detektor (die 2° geben den Winkel an, unter dem der Lichtstrahl im Auge auf die Netzhaut trifft). Der angegebene Reflexionsgrad bezieht sich insbesondere auf die Oberfläche des Spiegelelements, welche der Außenscheibe zugewandt ist (außenseitige Oberfläche), wobei typischer Spiegelelemente allerdings einen zumindest annähernd identischen Reflexionsgrad an beiden Oberflächen aufweisen.

Im transparenten Zustand beträgt der Transmissionsgrad des Spiegelelements bevorzugt mehr als 60% (besonders bevorzugt mehr als 70%, ganz besonders bevorzugt mehr als 80%). Im spiegelnden Zustand beträgt der Transmissionsgrad des Spiegelelements bevorzugt weniger als 50% (besonders bevorzugt weniger als 30%, ganz besonders bevorzugt weniger als 20%). Damit ist der integrierte Transmissionsgrad gemeint im Spektralbereich von 380 nm bis 780 nm, gemessen unter einem Winkel von 0° (zur Flächennormalen, orthogonale Transmission) mit Lichtart A und einem 2°-Detektor.

Es ist auch denkbar, dass das Spiegelelement mehrere verschiedene spiegelnde Zustände aufweist, welche sich im Reflexionsgrad unterscheiden. Weiter ist es denkbar, dass der Reflexionsgrad stufenlos regelbar ist. Entscheidend für die vorliegende Erfindung ist, dass mindestens ein transparenter und mindestens ein spiegelnder Zustand vorliegt, bevorzugt mit den angegebenen Werten für Transmissionsgrad und Reflexionsgrad.

Die Verbundscheibe weist bevorzugt einen außenseitigen Reflexionsgrad von weniger als 20% auf (besonders bevorzugt weniger als 10%), wenn das Spiegelelement im transparenten Zustand befindlich ist, und einen außenseitigen Reflexionsgrad von mehr als 50% (besonders bevorzugt mehr als 70%), wenn das Spiegelelement im spiegelnden Zustand befindlich ist. Der außenseitige Reflexionsgrad ist der Reflexionsgrad an der außenseitigen Oberfläche der Außenscheibe gegenüber von außen auftreffender Strahlung. Er wird als integrierter Reflexionsgrad im Spektralbereich von 380 nm bis 780 nm gemessen unter einem Winkel von 8° (zur Flächennormalen) mit Lichtart A und einem 2°-Detektor.

Das elektrisch schaltbare Spiegelelement weist eine aktive Schicht oder Schichtenfolge auf, welche im spiegelnden Zustand die spiegelnden Eigenschaften bereitstellt und im transparenten Zustand transparent ist. Diese aktive Schicht oder Schichtenfolge ist zwischen einer ersten Flächenelektrode und einer zweiten Flächenelektrode angeordnet. Die Flächenelektroden sind beim bestimmungsgemäßen Einsatz der Verbundscheibe mit einer externen Spannungsquelle verbunden, so dass über die Flächenelektroden eine elektrische Spannung an die aktive Schicht oder Schichtenfolge angelegt werden kann. Die Flächenelektroden und die aktive Schicht sind typischerweise im Wesentlichen parallel zu den Oberflächen der Außenscheibe und der Innenscheibe angeordnet.

Die Flächenelektroden sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden enthalten bevorzugt zumindest ein Metall, eine Metalllegierung oder ein transparentes leitfähiges Oxid (*transparent conducting oxide,* TCO). Die Flächenelektroden können beispielsweise auf Basis von Silber, Gold, Kupfer, Nickel, Chrom, Wolfram, Indium-Zinnoxid (ITO), Gallium-dotiertem oder Aluminium-dotiertem Zinkoxid und/oder Fluordotiertem oder Antimon-dotiertem Zinnoxid ausgebildet sein, bevorzugt auf Basis von Silber oder ITO. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Die Flächenelektroden sind typischerweise mit elektrischen Anschlusskabeln kontaktiert, welche über die Seitenkante der Verbundscheibe herausgeführt sind und mit einer externen Steuereinheit verbunden sind. Die elektrische Verbindung zwischen Anschlusskabel und Flächenelektrode kann über eine sogenannte Stromsammelschiene erfolgen, welche auf der Flächenelektrode angeordnet ist. Solche Stromsammelschienen (*busbars*) können beispielsweise durch aufgelegte Streifen einer elektrisch leitfähigen Folie (beispielsweise Kupferfolie) realisiert sein oder durch einen elektrisch leitfähigen Aufdruck (beispielsweise eine silberhaltige Emaille).

Hinsichtlich der Ausgestaltung der aktiven Schicht oder Schichtenfolge sind verschiedene Varianten möglich. In einer Ausgestaltung enthält die aktive Schicht Flüssigkristalle oder ist sogar auf Basis von Flüssigkristallen ausgebildet. Die Flüssigkristalle weisen im spannungsfreien Zustand beispielweise eine Helixstruktur auf, welche reflektierend ist, wodurch der spiegelnde Zustand realisiert wird. Bei einer angelegten elektrischen Spannung faltet sich die Helixstruktur gleichsam auf (beziehungsweise dreht sich auf), so dass die Flüssigkristalle nicht mehr (signifikant) reflektieren, wodurch der transparente Zustand realisiert wird. Typischerweise sind zwei solcher aktiven Schichten vorhanden und übereinander gestapelt, welche jeweils auf eine Polarisationsrichtung reflektierend wirkt, wobei die beiden Polarisationsrichtungen der beiden aktiven Schichten um 90° zueinander gedreht sind. So kann eine Reflexion gegenüber Licht sämtlicher Polarisationsarten erreicht werden. In einer weiteren Ausgestaltung liegt eine aktive Schichtenfolge vor, innerhalb der durch die angelegte Spannung eine Wanderung von Wasserstoff beziehungsweise Wasserstoffionen induziert werden kann. Eine dieser Schichten ist typischerweise eine metallische Schicht (beispielsweise auf Basis von Lithium oder einer Magnesium-NickelLegierung), welche im wasserstofffreien metallischen Zustand reflektierend ist, wodurch der spiegelnde Zustand realisiert wird. Durch eine elektrische Spannung wandert Wasserstoff in die besagte Schicht ein, so dass die Schicht in einen hydrierten, nicht metallischen und nicht reflektierenden Zustand überführt wird, wodurch der transparente Zustand realisiert wird.

Elektrisch schaltbare Spiegelelemente sind an sich bekannt und können vorgefertigt erworben werden, insbesondere als Folien. Vorgefertigte elektrisch schaltbare Spiegelelemente auf Flüssigkristallbasis in Folienform sind im Handel verfügbar (z.B. von Kent Optronics). Auch Spiegelelemente in Form einer Beschichtung sind fachbekannt (siehe z.B. AIST, Japan).

Ist das elektrisch schaltbare Spiegelelement als Folie ausgebildet, so umfasst es zumindest eine polymere Trägerfolie, auf welcher das Schichtsystem aus den Flächenelektroden und der dazwischen angeordneten aktiven Schicht(enfolge) aufgebracht ist. Typischerweise liegt das Spiegelelement als Mehrschichtfolie vor und weist zwei polymere Trägerfolien auf, wobei das Schichtsystem aus den Flächenelektroden und der dazwischen angeordneten aktiven Schicht(enfolge) zwischen den Trägerfolien angeordnet sind. Die Mehrschichtfolie umfasst dann in der folgenden Reihenfolge: eine erste Trägerfolie - die erste Flächenelektrode - die aktive Schicht oder Schichtenfolge - die zweite Flächenelektrode - eine zweite Trägerfolie. Die Trägerfolien sind bevorzugt aus thermoplastischem Material ausgebildet, beispielsweise auf Basis von Polyethylenterephthalat (PET), Polypropylen, Polyvinylchlorid, fluorinierte Ethylen-Propylene, Polyvinylfluorid oder Ethylen-Tetrafluorethylen, besonders bevorzugt auf Basis von PET. Die Dicke der Trägerfolien beträgt bevorzugt von 10 µm bis 200 µm. Die Flächenelektroden sind typischerweise als Beschichtungen auf diesen Trägerfolien bereitgestellt.

Es ist möglich, dass das elektrisch schaltbare Spiegelelement vollflächig in der Verbundscheibe vorhanden ist, sich also bis zu den Seitenkanten der Verbundscheibe erstreckt. Es ist alternativ aber auch möglich, dass sich das Spiegelelement nicht bis zu den Seitenkanten der Verbundscheibe erstreckt. Im Randbereich der Verbundscheibe ist dann kein Spiegelelement vorhanden, was aber akzeptabel sein kann (insbesondere dann, wenn der besagte Randbereich in einem opaken Maskierungsbereich der Verbundscheibe angeordnet ist). Ist das elektrisch schaltbare Spiegelelement als Folie ausgebildet, so kann das Spiegelelement optional in einem Ausschnitt einer vierten Verbindungsschicht angeordnet sein, von der es rahmenartig umgeben wird.

Die Verbindungsschichten, d.h. die erste Verbindungsschicht, die zweite Verbindungsschicht, sofern vorhanden die dritte Verbindungschicht, sofern vorhanden die vierte Verbindungsschicht und sofern vorhanden die fünfte Verbindungsschicht haben die Aufgabe, die Bestandteile der Verbundscheibe, zwischen denen sie angeordnet sind, adhäsiv miteinander zu verbinden. Die Verbindungsschichten sind bevorzugt jeweils aus einer thermoplastischen Lage oder aus mehreren thermoplastischen Lagen ausgebildet.

Die thermoplastischen Lagen sind bevorzugt auf Basis von Polyvinylbutyral (PVB), Ethylen-Vinylacetat (EVA) oder Polyurethan (PU) ausgebildet oder aus Gemischen oder Copolymeren oder Derivaten davon, besonders bevorzugt auf Basis von PVB. Damit ist gemeint, dass die Lage größtenteils das besagte Polymer enthält (Anteil größer als 50 Gew.-%). Die Lage kann außer dem Polymer weitere Zusätze enthalten, beispielsweise Weichmacher, UV-Absorber oder Stabilisatoren. Jede thermoplastische Lage ist bevorzugt aus einer thermoplastischen Folie ausgebildet. Die Dicke jeder Folie beträgt bevorzugt von 0,2 mm bis 1 mm. Beispielsweise können PVB-Folien mit den Standarddicken von 0,38 mm oder 0,76 mm verwendet werden.

Die Verbindungsschichten können alternativ beispielsweise als Klebstoffschichten ausgebildet sein. Bevorzugt sind dabei sogenannte optisch klare Klebstoffe (*optically clear adhesives,* OCA). Das ist besonders vorteilhaft im Hinblick auf ein ästhetisches Erscheinungsbild der Fahrzeug-Dachscheibe. OCAs sind dem Fachmann als solche bekannt. Sie zeichnen sich insbesondere durch eine hohe optische Qualität aus. Sie sind insbesondere dort gebräuchlich, wo die hohe optische Qualität notwendig ist, so dass die Klebstoffschicht quasi unsichtbar ist, beispielsweise bei Displays oder Touch Panels. Optisch klare Klebstoffe zeichnen sich insbesondere durch eine hohe Lichttransmission aus und die Tatsache, dass eine verzerrungsarme Durchsicht möglich ist. Der optisch klare Klebstoff ist bevorzugt ein 2-Komponenten-Pulyurethan-Klebstoff, ein 1-Komponenten-Acrylat-Klebstoff, ein 1-Komponenten-Silikon-Klebstoff oder ein 1-Komponenten-Acrylat-Hybrid-Klebstoff.

Grundsätzlich ist auch eine Kombination denkbar, wobei mindestens eine Verbindungsschicht aus mindestens einer thermoplastischen Lage und mindestens eine andere Verbindungsschicht als Klebstoffschicht ausgebildet ist.

In einer vorteilhaften Ausgestaltung ist die erfindungsgemäße Verbundscheibe mit einer IR-reflektierenden Beschichtung versehen. Diese Beschichtung kann auch als Sonnenschutzbeschichtung (*solar control coating*) bezeichnet werden. Die Sonnenschutzbeschichtung hat die Aufgabe, den Durchtritt von infraroten Strahlungsanteilen der Sonnenstrahlung durch die Verbundscheibe zu verringern. Die Beschichtung weist dazu IR-reflektierende Eigenschaften auf, insbesondere im nahen Infrarot (IR)-Bereich, beispielsweise im Wellenlängenbereich von 780 nm bis 3000 nm. Die Sonnenschutzbeschichtung ist dazu geeignet, infrarote Anteile der Sonnenstrahlung zu reflektieren, so dass der Innenraum durch direkte Wärmestrahlung weniger stark erwärmt wird und die (in Einstrahlrichtung) hinter der Sonnenschutzbeschichtung befindlichen Schichten der Verbundscheibe weniger stark erwärmt werden. Letzteres wirkt sich wiederum vorteilhaft auf eine niedrige Emissivität der Verbundscheibe aus, die sich weniger stark erwärmt und daher weniger Wärmestrahlung aussendet. Insgesamt wird der Wärme- beziehungsweise Energieeintrag durch die Verbundscheibe hindurch verringert und der thermische Komfort im Innenraum verbessert.

Die Sonnenschutzbeschichtung kann beispielsweise auf der innenraumseitigen Oberfläche der Außenscheibe angeordnet sein oder auf der außenseitigen Oberfläche der Innenscheibe. Die Sonnenschutzbeschichtung weist bevorzugt einen geringeren Abstand zur Außenscheibe auf als das elektrisch schaltbare Spiegelelement und auch einen geringeren Abstand zur Außenscheibe auf als die Aerogel-Lage, um auch diese vor IR-Strahlung zu schützen. Die Sonnenschutzbeschichtung kann auch auf einer Trägerfolie angeordnet sein (beispielsweise auf Basis von PET, bevorzugt mit einer Dicke von 10 µm bis 200 µm), welche zwischen zwei Verbindungsschichten (insbesondere zwischen zwei thermoplastischen Lagen) angeordnet ist.

Besonders bevorzugt ist die Sonnenschutzbeschichtung auf der innenraumseitigen Oberfläche der Außenscheibe aufgebracht Das ist besonders vorteilhaft im Hinblick auf die Verringerung einer Erwärmung der dahinter befindlichen Schichten der Verbundscheibe, weil die Sonnenschutzbeschichtung sehr weit außenliegend angeordnet ist.

Die Sonnenschutzbeschichtung ist typischerweise ein Stapel von Dünnschichten mit mindestens einer elektrisch leitfähigen und IR-reflektierenden Schicht auf Basis eines Metalls, insbesondere Silber. Außerdem sind meist dielektrische Schichten vorhanden, welche die optischen Eigenschaften der Beschichtung optimieren (beispielsweise Antireflexionsschichten oder Schichten zur Beeinflussung der Struktur der metallischen Schicht) und/oder die metallische Schicht vor Korrosion schützen. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumcarbid ausgebildet sein.

Die Sonnenschutzbeschichtung ist bevorzugt vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Fensterscheibe gewährleisten sollen und daher nicht mit der Sonnenschutzbeschichtung versehen sind. Der umlaufende unbeschichtete Randbereich weist beispielsweise eine Breite von bis zu 20 cm auf und ist bevorzugt vollständig in einem opaken Maskierungsbereich der Verbundscheibe angeordnet. Der umlaufende unbeschichtete Randbereich verhindert den direkten Kontakt der Sonnenschutzbeschichtung zur umgebenden Atmosphäre, so dass die Sonnenschutzbeschichtung im Innern der Verbundscheibe vor Korrosion und Beschädigung geschützt ist. Bevorzugt sind mindestens 80% der Scheibenoberfläche mit der Sonnenschutzbeschichtung versehen.

Alternativ zu einer Sonnenschutzbeschichtung kann die Verbundscheibe in einer bevorzugten Ausführungsform eine IR-Reflexionsfolie aufweisen, welche zwischen der Außenscheibe und der ersten Verbindungsschicht angeordnet ist. In dieser Ausführungsform ist eine fünfte Verbindungsschicht zwischen der Außenscheibe und der IR-Reflexionsfolie angeordnet.

Die IR-Reflexionsfolie ist wenigstens teilweise reflektierend für IR-Strahlung, insbesondere für aus der äußeren Umgebung auf die IR-Reflexionsfolie auftreffende IR-Strahlung. Die IR-Reflexionsfolie kann beispielsweise mehr als 10%, mehr als 20%, mehr als 30%, mehr als 40%, mehr als 50%, mehr als 60%, mehr als 70%, mehr als 80 % oder mehr als 90 % der aus der äußeren Umgebung auftreffenden IR-Strahlung reflektieren. Die angegeben Werte für den Reflexionsgrad können sich auf IR-Strahlung im nahen Infrarotbereich oder auf den gesamten Infrarotbereich beziehen, insbesondere im nahen Infrarot (IR)-Bereich, beispielsweise im Wellenlängenbereich von 780 nm bis 3000 nm.

IR-Reflexionsfolien sind kommerziell erhältlich. Die IR-Reflexionsfolie kann beispielsweise eine XIR^{®}-Folie sein. Die IR-Reflexionsfolie kann, - insbesondere wenn es sich um eine XIR^{®}-Folie handelt - eine wenigstens teilweise transparente Trägerfolie aufweisen, welche als Träger für eine ein- oder beidseitig aufgebrachte spektral selektive Beschichtung fungiert. Die Beschichtung kann beispielsweise Metall- und/oder Keramikpartikel aufweisen, mittels derer IR-Strahlen reflektierbar sind. Die wenigstens teilweise transparente Trägerfolie der IR-Reflexionsfolie kann beispielsweise eine PET-Folie sein. Selbstredend kann die Trägerfolie jedoch auch andere Stoffe, insbesondere Kunststoffe, aufweisen.

Die innenraumseitige Oberfläche der Innenscheibe ist bevorzugt mit einer emissivitätsmindernden Beschichtung versehen. Emissivitätsmindernde Beschichtungen sind auch als Wärmestrahlung reflektierende Beschichtungen, Beschichtungen niedriger Emissivität oder LowE-Beschichtungen (*low emissivity*) bekannt. Mit Emissivität wird das Maß bezeichnet, welches angibt, wie viel Wärmestrahlung die Scheibe in Einbaulage im Vergleich zu einem idealen Wärmestrahler (einem schwarzen Körper) in einen Innenraum abgibt. Emissivitätsmindernde Beschichtungen haben die Funktion, die Einstrahlung von Wärme in den Innenraum zu vermeiden (IR-Anteile der Sonnenstrahlung und insbesondere die thermische Strahlung der Scheibe selbst) und ebenso die Abstrahlung von Wärme aus dem Innenraum heraus. Sie weisen reflektierende Eigenschaften gegenüber infraroter Strahlung auf, insbesondere gegenüber Wärmestrahlung im Spektralbereich von 5 µm - 50 µm (vgl. auch Norm DIN EN 12898:2019-06). Dadurch wird der thermische Komfort im Innenraum wirkungsvoll verbessert. Die emissivitätsmindernden Beschichtungen können bei hohen Außentemperaturen und Sonneneinstrahlung die von der gesamten Scheibe in Richtung des Innenraums abgestrahlte Wärmestrahlung zumindest teilweise reflektieren. Bei niedrigen Außentemperaturen können sie die aus dem Innenraum abgestrahlte Wärmestrahlung reflektieren und somit die Wirkung der kalten Scheibe als Wärmesenke verringern. Durch die emissivitätsmindernde Beschichtung wird der thermische Komfort im Innenraum weiter erhöht.

Die emissivitätsmindernde Beschichtung ist typischerweise ein transparenter Stapel von Dünnschichten. Die emissivitätsmindernde Beschichtung weist bevorzugt mindestens eine, besonders bevorzugt genau eine, elektrisch leitfähige Schicht auf, welche die IR-reflektierenden Eigenschaften bereitstellt. Die leitfähige Schicht ist bevorzugt auf Basis eines transparenten leitfähigen Oxids (TCO, *transparent conductive oxide*) ausgebildet, insbesondere Indium-Zinn-Oxid (ITO, *indium tin oxide*), alternativ Indium-Zink-Mischoxid (IZO), Gallium-dotiertes Zinnoxid (GZO), Fluor-dotiertes Zinnoxid (FTO, SnO₂:F), Antimondotiertes Zinnoxid (ATO, SnO₂:Sb) oder Niob-dotiertes Titanoxid (TiO₂:Nb). Im Gegensatz zu Metallen sind TCOs nicht korrosionsanfällig, so dass sie auf der exponierten innenraumseitigen Oberfläche der Innenscheibe eingesetzt werden können. Außer der leitfähigen Schicht weist die Beschichtung typischerweise dielektrische Schichten auf (beispielsweise auf Basis von Siliziumoxid oder -nitrid), die insbesondere der Optimierung der optischen Eigenschaften (beispielsweise Lichttransmission) dienen oder als Barriereschichten zur Regulierung von Sauerstoffdiffusion bei der Abscheidung der Beschichtung dienen.

Die emissivitätsmindernde Beschichtung ist bevorzugt vollflächig auf der innenraumseitigen Oberfläche der Innenscheibe aufgebracht, optional mit Ausnahme eines umlaufenden unbeschichteten Randbereichs.

Die Verbundscheibe ist als Verglasungselement vorgesehen und weist daher einen transparenten Durchsichtsbereich auf. Der Durchsichtbereich erlaubt die Durchsicht durch die Verbundscheibe. Die Verbundscheibe kann dabei insgesamt transparent ausgebildet sein, so dass der Durchsichtsbereich die gesamte Verbundscheibe umfasst. Die Verbundscheibe weist im Durchsichtsbereich bevorzugt eine Lichttransmission von mindestens 6% auf. Mit Lichttransmission ist dabei die Gesamttransmission gemeint, bestimmt durch das durch ECE-R 43, Anhang 3, § 9.1 festgelegte Verfahren zur Prüfung der Lichtdurchlässigkeit von Kraftfahrzeugscheiben. Diese Ausführungen beziehen sich selbstredend auf die Verbundscheibe mit dem elektrisch schaltbaren Spiegelelement im transparenten Zustand.

Der transparente Durchsichtsbereich erlaubt die Durchsicht durch die Verbundscheibe. Die Verbundscheibe kann aber getönt oder gefärbt sein, um beispielsweise eine Blendwirkung gegenüber Personen im Innenraum oder den Durchtritt von Wärmestrahlung zu reduzieren.

Die Verbundscheibe kann aber auch einen opaken Maskierungsbereich aufweisen, durch den keine Durchsicht möglich ist und durch den kein Licht fällt. Ein solcher Maskierungsbereich ist insbesondere bei Fahrzeugscheiben üblich. Er wird typischerweise durch einen opaken Abdeckdruck auf mindestens einer der Oberflächen von Innenscheibe und/oder Außenscheibe ausgebildet, beispielsweise auf der innenraumseitigen Oberfläche der Außenscheibe. Dabei wird eine Emaille-Druckpaste, welche Glasfritten und ein Pigment (insbesondere Schwarzpigment) enthält, beispielsweise im Siebdruckverfahren auf die Oberfläche aufgedruckt und anschließend eingebrannt. Der Maskierungsbereich umfasst typischerweise einen umlaufenden Randbereich der Verbundscheibe, der einen zentralen Durchsichtsbereich rahmenartig umgibt. Der Maskierungsbereich kann aber auch weitere Bereiche umfassen, welche beispielsweise als eine Art von Querverstrebungen des rahmenartigen Randbereichs ausgebildet sind. Die Verbundscheibe weist im Maskierungsbereich bevorzugt eine Lichttransmission von höchstens 1% auf, besonders bevorzugt höchstens 0,1%, insbesondere im Wesentlichen 0% auf.

Ein Maskierungsbereich kann alternativ auch dadurch ausgebildet sein, dass ein umlaufender Randbereich der ersten Verbindungsschicht, der zweiten Verbindungsschicht und/oder der dritten Verbindungsschicht opak ausgebildet ist oder eine rahmenförmige opake Folie zwischen der Außenscheibe und der Innenscheibe angeordnet ist.

Das elektrisch schaltbare Spiegelelement und die Aerogel-Lage decken den Durchsichtsbereich der Verbundscheibe bevorzugt vollständig ab. Selbiges gilt für die Sonnenschutzbeschichtung, die IR-Reflexionsfolie und die emissivitätsmindernde Beschichtung, falls eine solche vorhanden ist. Insbesondere bei der Sonnenschutzbeschichtung können jedoch lokale Bereiche nicht mit der Beschichtung versehen sein, die als Kommunikations- oder Datenübertragungsfenster dienen. Die vollständige Abdeckung (mit Ausnahme etwaiger Kommunikations- oder Datenübertragungsfenster) ist vorteilhaft für die Verminderung des Wärmedurchtritts durch die Verbundscheibe. Typischerweise erstrecken sich das elektrisch schaltbare Spiegelelement, die Aerogel-Lage und gegebenenfalls die Sonnnenschutzbeschichtung, die IR-Reflexionsfolie und die emissivitätsmindernde Beschichtung auch über den Durchsichtsbereich hinaus in den Maskierungsbereich hinein. Sie können sich unabhängig voneinander bis zur Seitenkante der Verbundscheibe erstrecken oder im Maskierungsbereich enden, wobei ihre Kanten einen Abstand zur Seitenkante der Verbundscheibe aufweisen.

Die Außenscheibe und die Innenscheibe sind bevorzugt Glasscheiben, besonders bevorzugt gefertigt aus Kalk-Natron-Glas, wie es für Fensterscheiben üblich ist. Eine oder beide der Scheiben können grundsätzlich aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Dicken der Außenscheibe und der Innenscheibe betragen unabhängig voneinander bevorzugt von 0,5 mm bis 5 mm, besonders bevorzugt von 1 mm bis 3 mm. Die Außenscheibe und die Innenscheibe können optional unabhängig voneinander thermisch oder chemisch vorgespannt, teilvorgespannt oder nicht vorgespannt sein.

Die erfindungsgemäße Verbundscheibe ist in einer bevorzugten Ausgestaltung eine Fahrzeug-Dachscheibe. Das Fahrzeug kann ein beliebiges Fortbewegungsmittel für den Verkehr zu Lande, zu Wasser oder in der Luft sein, beispielsweise ein Schiff, Flugzeug, Schienenfahrzeug oder Kraftfahrzeug (wie ein Personenkraftwagen oder Lastkraftwagen). Die Fahrzeug-Dachscheibe ist ganz besonders bevorzugt eine Dachscheibe eines Personenkraftwagens oder Lastkraftwagens.

Besonders bevorzugt ist die Verbundscheibe die Dachscheibe eines Elektrofahrzeugs. Durch die erfindungsgemäße Verbundscheibe wird aufgrund des geringen Wärmedurchtritt der thermische Komfort im Fahrzeug-Innenraum verbessert, so dass Heizvorrichtungen (bei geringen Außentemperaturen) beziehungsweise Kühlvorrichtungen (bei hohen Außentemperaturen) weniger intensiv betrieben werden müssen. Dadurch kann Energie eingespart werden, was bei Elektrofahrzeugen besonders vorteilhaft ist hinsichtlich der Laufzeit der Bordbatterie.

Die Verbundscheibe kann plan sein oder auch zylindrisch oder sphärisch gebogen. Bei Fahrzeugscheiben für Personenkraftwagen sind sphärisch gebogene Verbundscheiben üblich. Plane Verbundscheibe kommen insbesondere im Architekturbereich vor, aber auch im Fahrzeugbereich, beispielsweise als Verglasungen von Bussen oder (beispielsweise landwirtschaftlichen oder bauwirtschaftlichen) Nutzfahrzeugen.

Die Außenscheibe, die Innenscheibe und Verbindungsschichten können unabhängig voneinander klar sein oder getönt oder gefärbt. Im Falle von Fahrzeug-Dachscheiben sind starke Tönungen üblich, wobei die Lichttransmission durch die Verbundscheibe (genauer gesagt: durch den Durchsichtsbereich) auf unter 50%, insbesondere unter 20% reduziert wird. Dies wird bevorzugt durch eine entsprechend getönte Außenscheibe, Innenscheibe, erste Verbindungsschicht, zweite Verbindungsschicht und/oder dritte Verbindungsschicht erreicht. Durch die starke Tönung wird die Sonneneinstrahlung verringert, wodurch sich der Innenraum weniger stark erwärmt und eine Blendwirkung vermieden wird. In einer bevorzugten Ausgestaltung ist die Innenscheibe getönt oder gefärbt.

Ein weiterer Vorteil getönter Schichten besteht darin, dass dadurch eine etwaige Störung für den Benutzer, einen externen Betrachter oder den Straßenverkehr aufgrund der stark reflektierenden Verbundscheibe, wenn das Spiegelelement im spiegelnden Zustand befindlich ist, abgemildert werden kann. Um die außenseitige Reflexion abzuschwächen, wird eine außenseitig zum Spiegelelement befindliche Schicht getönt ausgestaltet, beispielsweise die Außenscheibe und/oder die erste Verbindungsschicht und/oder die zweite Verbindungsschicht. Bevorzugt ist dabei die Außenscheibe getönt und/oder die erste Verbindungsschicht getönt und die zweite Verbindungsschicht klar, weil die Tönung zu einer Erwärmung infolge von Strahlungsabsorption führt, welche sich dann aber nicht in den Innenraum fortsetzen kann, weil die Außenscheibe und die erste Verbindungsschicht durch die Aerogel-Lage thermisch gegenüber dem Innenraum abgeschirmt sind.

Um die innenraumseitige Reflexion abzuschwächen, wird eine innenraumseitig zum elektrisch schaltbaren Spiegelelement befindliche Schicht getönt ausgestaltet, beispielsweise die Innenscheibe und/oder die dritte Verbindungsschicht zwischen (als Folie ausgeführtem) elektrisch schaltbarem Spiegelelement und Innenscheibe.

Um die die innenraumseitige Reflexion abzuschwächen kann die Verbundscheibe alternativ oder zusätzlich eine durch Abscheidung hergestellte (dunkle) transmissionsmindernde Beschichtung aufweisen. Die transmissionsmindernde Beschichtung ist vorzugsweise auf der Innenscheibe abgeschieden. Die transmissionsmindernde Beschichtung basiert beispielsweise auf Titannitrid und/oder Titancarbid oder ist eine amorphe Kohlenstoffschicht.

Die transmissionsmindernde Beschichtung ist typischerweise vollflächig auf die Oberfläche der Innenscheibe aufgebracht, eventuell mit Ausnahme eines umlaufenden Randbereichs und/oder anderer lokal begrenzter Bereiche, die beispielsweise zur Datenübertragung dienen können. Der beschichtete Anteil der Oberfläche der Innenscheibe beträgt bevorzugt mindestens 90%.

In einer Ausführungsform der Erfindung ist die Verbundscheibe so ausgebildet, dass sie in einem ersten Bereich außenraumseitig des elektrisch schaltbaren Spiegelelements, eine Lichttransmission zwischen 70% und 90% aufweist und einem zweiten Bereich innenraumseitig des elektrisch schaltbaren Spiegelelements, eine Lichttransmission von maximal 70% aufweist. Für die Lichttransmission sind sämtliche Bestandteile der Verbundscheibe im ersten Bereich bzw. zweiten Bereich zu berücksichtigen, d.h. die Lichttransmission im ersten Bereich ist die summarische Lichttransmission sämtlicher Bestandteile der Verbundscheibe im ersten Bereich und die Lichttransmission im zweiten Bereich ist die summarische Lichttransmission sämtlicher Bestandteile der Verbundscheibe im zweiten Bereich. Demnach kann die Verbundscheibe auf beiden Seiten des elektrisch schaltbaren Spiegelelements verschiedene Lichttransmissionen aufweisen, wobei die Lichttransmission bevorzugt im zweiten Bereich der Verbundscheibe auf der dem Innenraum zugewandten Seite des Spiegelelements geringer sein kann als im ersten Bereich der Verbundscheibe auf der der äußeren Umgebung zugewandten Seite des Spiegelelements. Durch die verminderte Lichttransmission im zweiten Bereich der Verbundscheibe können auf der dem Innenraum zugewandten Seite des Spiegelelements unerwünschte innenraumseitige Lichtreflexionen reduziert werden.

Dem Fachmann sind Mittel zur Verminderung der Lichttransmission in einer Verbundscheibe an sich bekannt.

Die Verbundscheibe kann hergestellt werden, indem die einzelnen Lagen in der vorgesehenen Reihenfolge zu einem Schichtstapel gestapelt werden und anschließend miteinander laminiert werden. Hierzu können an sich bekannte Verfahren zum Einsatz kommen, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe über die Verbindungsschichten erfolgt dabei üblicherweise unter Einwirkung von Hitze, Vakuum und/oder Druck.

Die Erfindung umfasst außerdem die Verwendung einer erfindungsgemäßen Verbundscheibe als Verglasung eines Fahrzeugs, eines Gebäudes oder eines Innenraums, beziehungsweise als Bestandteil einer solchen Verglasung, insbesondere als Dachfensterscheibe (Fahrzeug-Dachscheibe) von Fortbewegungsmitteln für den Verkehr auf dem Lande, in der Luft oder zu Wasser. Die Fahrzeug-Dachscheibe kann im Prinzip in jedem beliebigen Land-, Luft oder Wasserfahrzeug eingesetzt werden, bevorzugt in Kraftfahrzeugen oder Schienenfahrzeugen, besonders bevorzugt in Personenkraftwagen oder Lastkraftwagen, insbesondere in Elektrofahrzeugen (Elektro-Personenkraftwagen).

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Fig. 1: eine Draufsicht auf eine Ausgestaltung der erfindungsgemäßen Verbundscheibe,
- Fig. 2: einen Querschnitt entlang X-X' durch die Verbundscheibe aus Figur 1,
- Fig. 3: einen Querschnitt durch eine weitere Ausgestaltung der erfindungsgemäßen Verbundscheibe,
- Fig. 4: einen Querschnitt durch eine weitere Ausgestaltung der erfindungsgemäßen Verbundscheibe,
- Fig. 5: einen Querschnitt durch eine weitere Ausgestaltung der erfindungsgemäßen Verbundscheibe.

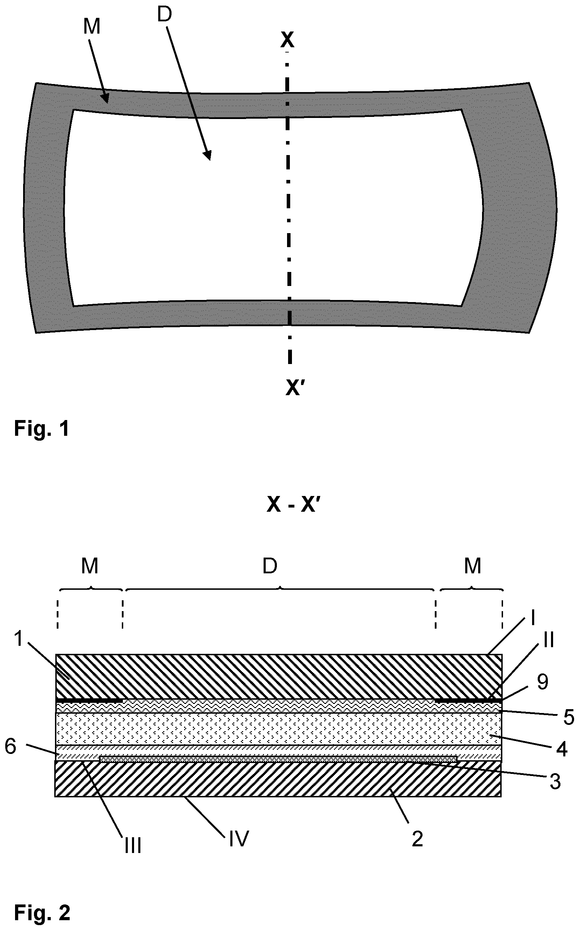

Figur 1 und Figur 2 zeigen je ein Detail einer Ausgestaltung der erfindungsgemäßen Verbundscheibe. Die Verbundscheibe ist als Fahrzeug-Dachscheibe ausgelegt. Sie umfasst eine Außenscheibe 1 und eine Innenscheibe 2, die flächig miteinander verbunden sind. Die Außenscheibe 1 und die Innenscheibe 2 bestehen aus Kalk-Natron-Glas. Die Außenscheibe 1 weist beispielsweise eine Dicke von 2,1 mm auf, die Innenscheibe 2 weist beispielsweise eine Dicke von 1,6 mm auf. Die Außenscheibe 1 ist in Einbaulage der äußeren Umgebung, die Innenscheibe 2 dem Fahrzeug-Innenraum zugewandt.

Die Verbundscheibe weist einen opaken Maskierungsbereich M auf, der umlaufend im Randbereich angeordnet ist und einen zentralen transparenten Durchsichtsbereich D rahmenartig umgibt. Im Maskierungsbereich M ist ein schwarzer Abdeckdruck 9 auf der innenraumseitigen Oberfläche II der Außenscheibe 1 aufgebracht. Der Durchsichtsbereich D erlaubt die Durchsicht durch die Verbundscheibe, während der opake Maskierungsbereich M undurchsichtig ist.

Zwischen der Außenscheibe 1 und der Innenscheibe 2 ist vollflächig eine Aerogel-Lage 4 angeordnet. Eine erste Verbindungsschicht 5 ist zwischen der Aerogel-Lage 4 und der Außenscheibe 1 angeordnet und eine zweite Verbindungsschicht 6 ist zwischen der Innenscheibe 2 und der Aerogel-Lage 4 angeordnet. Die erste Verbindungschicht 5 und die zweite Verbindungsschicht 6 sind beispielsweise jeweils aus einer PVB-Folie mit einer Dicke von 0,76 mm ausgebildet.

Ein elektrisch schaltbares Spiegelelement 3 ist als Beschichtung auf der außenseitigen Oberfläche III der Innenscheibe 2 angeordnet. Das elektrisch schaltbare Spiegelelement 3 erstreckt sich nicht vollflächig über die gesamte außenseitige Oberfläche III der Innenscheibe 2, in einem Randbereich ist das elektrisch schaltbare Spiegelelement 3 nicht angeordnet. Die Seitenkanten des elektrisch schaltbaren Spiegelelements 3 sind in Durchsicht durch die Verbundscheibe im Maskierungsbereich M angeordnet.

Die Aerogel-Lage 4 ist beispielsweise auf Basis eines Silikat-Aerogels ausgebildet und 8 mm dick.

Das elektrisch schaltbare Spiegelelement 3 weist einen transparenten Zustand auf und einen spiegelnden Zustand. Bei hohen Außentemperaturen und starker Sonneneinstrahlung kann der Benutzer das Spiegelelement 3 durch eine geeignete elektrische Spannung vom transparenten in den spiegelnden Zustand schalten. Dann gelangt die Sonnenstrahlung nicht mehr (oder in weitaus geringerem Maße) in den Fahrzeug-Innenraum, welcher sich folglich weniger stark erwärmt. Dieser Effekt beruht auf einer verminderten strahlungsbasierten Wärmeübertragung. Außerdem werden die Fahrzeug-Insassen nicht mehr durch das Sonnenlicht geblendet. Die Aerogel-Lage 4 vermindert die Wärmeleitung durch die Verbundscheibe. Der thermische Komfort im Innenraum wird durch die kombinierte Wirkung von Aerogel-Lage 4 und elektrisch schaltbarem Spiegelelement 3 wirksam verbessert. Außerdem wird das elektrisch schaltbare Spiegelelement 3 durch die Aerogel-Lage 4 vor thermischer Überlastung geschützt.

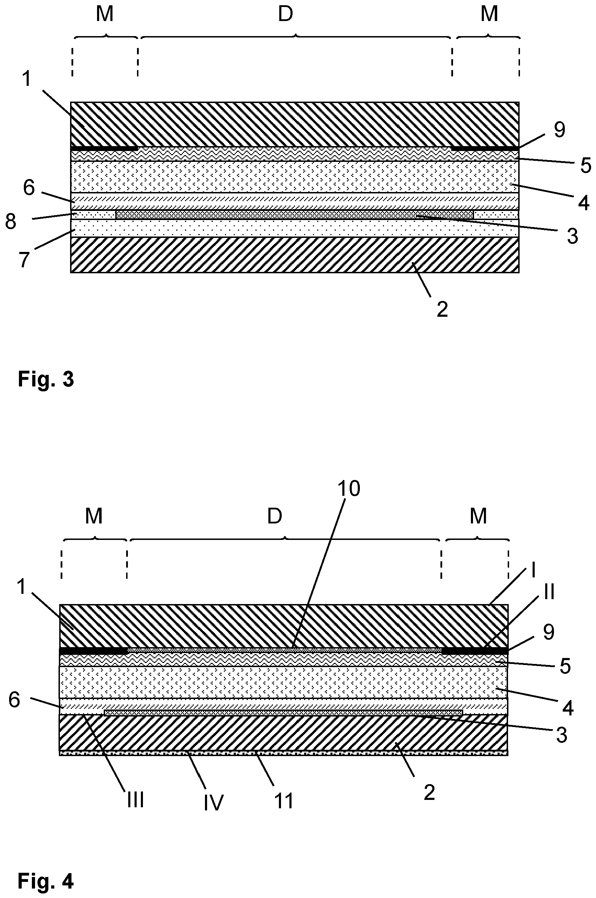

Figur 3 zeigt eine weitere Ausgestaltung der erfindungsgemäßen Verbundscheibe. Die Außenscheibe 1 mit dem Abdeckdruck 9, die Aerogel-Lage 4, die erste Verbindungsschicht 5, die zweite Verbindungsschicht 6 und die Innenscheibe 2 sind ebenso ausgebildet wie in der Ausgestaltung der Figuren 1 und 2.

Die Verbundscheibe unterscheidet sich von der vorherigen Ausgestaltung durch die Integration des elektrisch schaltbaren Spiegelelements 3. Das elektrisch schaltbare Spiegelelement 3 ist in der in der Figur 3 gezeigten Ausführungsform als Mehrschichtfolie ausgestaltet und in einen Ausschnitt einer vierten Verbindungsschicht 8 eingesetzt, welche das Spiegelelement 3 rahmenartig umgibt. Das elektrisch schaltbare Spiegelelement 3 mit der rahmenförmigen vierten Verbindungsschicht 8 ist über die zweite Verbindungsschicht 6 mit der Aerogel-Lage 4 verbunden und über eine dritte Verbindungsschicht 7 mit der Innenscheibe 2 verbunden. Die dritte Verbindungsschicht 7 ist beispielsweise aus einer PVB-Folie mit einer Dicke von 0,76 mm ausgebildet und die vierte Verbindungsschicht 8 ist beispielsweise aus einer PVB-Folie mit einer Dicke, welcher der Dicke des elektrisch schaltbaren Spiegelelements 3 entspricht, ausgebildet.

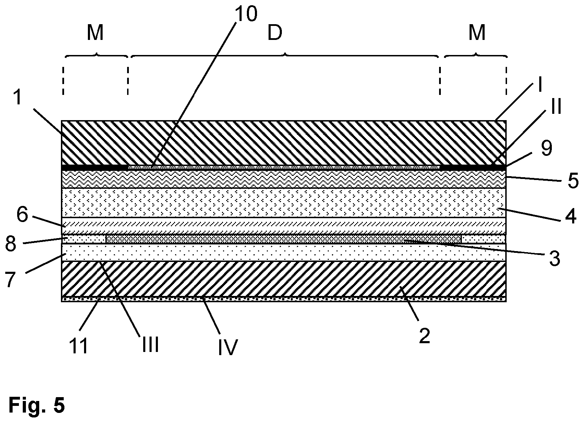

Figur 4 und Figur 5 zeigen weitere Ausgestaltungen der erfindungsgemäßen Verbundscheibe. Die in der Figur 4 gezeigte Ausführungsform unterscheidet sich von der in den Figuren 1 und 2 gezeigten und die in der Figur 5 gezeigte Ausführungsform unterscheidet sich von der in der Figur 3 gezeigten jeweils nur dahingehend, dass auf der innenraumseitigen Oberfläche II der Außenscheibe 1 eine Sonnenschutzbeschichtung 10 und auf der innenraumseitigen Oberfläche IV der Innenscheibe 2 eine emissivitätsmindernde Beschichtung 11 aufgebracht sind.

Die Sonnenschutzbeschichtung 10 deckt den Durchsichtsbereich D komplett ab und erstreckt sich von dort aus in den Maskierungsbereich M hinein. Im Maskierungsbereich M kann die Sonnenschutzbeschichtung 10 unterhalb oder oberhalb des Abdeckdrucks 9 angeordnet sein. Die Sonnenschutzbeschichtung 10 umfasst mindestens eine Silberschicht und weist reflektierende Eigenschaften im nahen IR-Bereich auf, so dass infrarote Anteile der Sonnenstrahlung in geringerem Maße durch die Verbundscheibe hindurchtreten können.

Die emissivitätsmindernde Beschichtung 11 ist vollflächig auf der innenraumseitigen Oberfläche IV der Innenscheibe 2 vorhanden. Die emissivitätsmindernde Beschichtung 11 weist mindestens eine Schicht auf Basis eines transparenten leitfähigen Oxids auf und reflektiert bei hohen Außentemperaturen die von der erwärmten Verbundscheibe ausgehende Wärmestrahlung in den Innenraum hinein und bei niedrigen Außentemperaturen die vom Innenraum ausgehende Wärmestrahlung. Die emissivitätsmindernde Beschichtung 11 verringert somit weiter den Wärmedurchtritt durch die Verbundscheibe infolge von IR- und Wärmestrahlung.

Das elektrisch schaltbare Spiegelelement 3 weist einen transparenten Zustand auf und einen spiegelnden Zustand. Bei hohen Außentemperaturen und starker Sonneneinstrahlung kann der Benutzer das Spiegelelement 3 durch eine geeignete elektrische Spannung vom transparenten in den spiegelnden Zustand schalten. Dann gelangt die Sonnenstrahlung nicht mehr (oder in weitaus geringerem Maße) in den Fahrzeug-Innenraum, welcher sich folglich weniger stark erwärmt. Dieser Effekt beruht auf einer verminderten strahlungsbasierten Wärmeübertragung. Außerdem werden die Fahrzeug-Insassen nicht mehr durch das Sonnenlicht geblendet. Die Aerogel-Lage 4 vermindert die Wärmeleitung durch die Verbundscheibe. Der thermische Komfort im Innenraum wird durch die kombinierte Wirkung von Aerogel-Lage 4 und Spiegelelement 3 wirksam verbessert. Außerdem wird das Spiegelelement 3 durch die Aerogel-Lage 4 vor thermischer Überlastung geschützt. Die Sonnenschutzbeschichtung 10 und die emissivitätsmindernde Beschichtung 11 verringern die strahlungsbasierte Wärmeübertragung weiter, wobei die Sonnenschutzbeschichtung 10 insbesondere auf IR-Anteile der direkten Sonnenstrahlung wirkt und die emissivitätsmindernde Beschichtung 11 auf die von der erwärmten Verbundscheibe oder dem erwärmten Innenraum ausgehende Wärmestrahlung.

### Bezugszeichenliste:

- 1: Außenscheibe
- 2: Innenscheibe
- 3: elektrisch schaltbares Spiegelelement
- 4: Aerogel-Lage
- 5: erste Verbindungsschicht
- 6: zweite Verbindungsschicht
- 7: dritte Verbindungsschicht
- 8: vierte Verbindungsschicht
- 9: Abdeckdruck
- 10: Sonnenschutzbeschichtung
- 11: emissivitätsmindernde Beschichtung

- D: Durchsichtsbereich der Verbundscheibe
- M: Maskierungsbereich der Verbundscheibe

- I: außenseitige Oberfläche der Außenscheibe
- II: innenraumseitige Oberfläche der Außenscheibe
- III: außenseitige Oberfläche der Innenscheibe
- IV: innenraumseitige Oberfläche der Innenscheibe

- X - X': Schnittlinie

## Patentansprüche

1. Verbundscheibe zur Abtrennung eines Innenraums von einer äußeren Umgebung, umfassend in der nachfolgend angegebenen Reihenfolge:
- eine Außenscheibe (1) mit einer außenseitigen Oberfläche (I) und einer innenraumseitigen Oberfläche (II),
- eine erste Verbindungsschicht (5),
- eine Aerogel-Lage (4),
- eine zweite Verbindungsschicht (6),
- ein elektrisch schaltbares Spiegelelement (3),
- eine Innenscheibe (2) mit einer außenseitigen Oberfläche (III) und einer innenraumseitigen Oberfläche (IV).

2. Verbundscheibe nach Anspruch 1, wobei das elektrisch schaltbare Spiegelelement (3) als Beschichtung auf der außenseitigen Oberfläche (III) der Innenscheibe (2) angeordnet ist.

3. Verbundscheibe nach Anspruch 1, wobei das elektrisch schaltbare Spiegelelement (3) als Folie ausgebildet ist und wobei zwischen dem elektrisch schaltbaren Spiegelelement (3) und der Innenscheibe (2) eine dritte Verbindungsschicht (7) angeordnet ist.

4. Verbundscheibe nach einem der Ansprüche 1 bis 3, wobei die Aerogel-Lage (4) auf Basis eines Silikat-Aerogels, Polymer-Aerogels oder Cellulose-Aerogels ausgebildet ist.

5. Verbundscheibe nach einem der Ansprüche 1 bis 4, wobei die Aerogel-Lage (4) eine Dicke von 0,1 mm bis 10 mm aufweist, besonders bevorzugt von 0,2 mm bis 8 mm, ganz besonders bevorzugt von 0,5 mm bis 6 mm.

6. Verbundscheibe nach einem der Ansprüche 1 bis 5, wobei das elektrisch schaltbare Spiegelelement (3) einen transparenten Zustand und einen spiegelnden Zustand aufweist und wobei von einer an das Spiegelelement (3) angelegten elektrischen Spannung abhängig ist, in welchem Zustand das Spiegelelement (3) vorliegt,
und wobei der Reflexionsgrad des Spiegelelements (3) im Spektralbereich von 380 nm bis 780 nm im transparenten Zustand weniger als 20% beträgt und im spiegelnden Zustand mehr als 50%.

7. Verbundscheibe nach Anspruch 6, wobei das elektrisch schaltbare Spiegelelement (3) eine aktive Schicht oder Schichtenfolge zwischen zwei Flächenelektroden aufweist und wobei
- die aktive Schicht Flüssigkristalle enthält, deren Konfiguration durch die angelegte elektrische Spannung beeinflusst werden, wodurch der transparente und der spiegelnde Zustand des Spiegelelements (3) realisiert wird, oder
- die aktive Schichtenfolge eine metallische Schicht enthält und durch die angelegte elektrische Spannung eine Wanderung von Wasserstoffionen in der Schichtenfolge induziert wird, so dass die metallische Schicht im spiegelnden Zustand des Spiegelelements (3) in einem metallischen Zustand vorliegt und im transparenten Zustand des Spiegelelements (3) in einem hydrierten Zustand.

8. Verbundscheibe nach einem der Ansprüche 1 bis 7 wobei die erste Verbindungsschicht (5), die zweite Verbindungsschicht (6) und/oder gegebenenfalls die dritte Verbindungsschicht (7) aus einer oder mehreren thermoplastischen Lagen auf Basis eines thermoplastischen Materials, bevorzugt auf Basis von Polyvinylbutyral (PVB), Ethylen-Vinylacetat (EVA) oder Polyurethan (PU), ausgebildet sind oder als Klebstoffschichten, bevorzugt auf Basis eines optisch klaren Klebstoffs (OCA) ausgebildet sind.

9. Verbundscheibe nach einem der Ansprüche 1 bis 8, wobei die innenraumseitige Oberfläche (II) der Außenscheibe (1) mit einer Sonnenschutzbeschichtung (10) versehen ist, welche mindestens eine Schicht auf Basis eines Metalls aufweist, insbesondere Silber oder wobei zwischen der ersten Verbindungsschicht (5) und der Außenscheibe (1) eine IR-Reflexionsfolie und zwischen der IR-Reflexionsfolie und der Außenscheibe (1) eine fünfte Verbindungsschicht angeordnet ist.

10. Verbundscheibe nach einem der Ansprüche 1 bis 9, wobei die innenraumseitige Oberfläche (IV) der Innenscheibe (2) mit einer emissivitätsmindernden Beschichtung (11) versehen ist, welche mindestens eine Schicht auf Basis eines transparenten leitfähigen Oxids aufweist.

11. Verbundscheibe nach einem der Ansprüche 1 bis 10, wobei die Außenscheibe (1) und die Innenscheibe (2) aus Kalk-Natron-Glas ausgebildet sind und bevorzugt eine Dicke von 1 mm bis 3 mm aufweisen.

12. Verbundscheibe nach einem der Ansprüche 1 bis 11, wobei ein transparenter oder transluzenter Durchsichtsbereich (D) von einem opaken Maskierungsbereich (M) rahmenartig umgeben wird
und wobei das elektrisch schaltbare Spiegelelement (3), die Aerogel-Lage (4) sowie gegebenenfalls die Sonnenschutzbeschichtung (10) und die emissivitätsmindernde Beschichtung (11) den Durchsichtsbereich (D) vollständig abdecken.

13. Verbundscheibe nach einem der Ansprüche 1 bis 12, wobei die Außenscheibe (1) und/oder die erste Verbindungsschicht (5) getönt ist.

14. Verbundscheibe nach einem der Ansprüche 1 bis 12, wobei die Innenscheibe (2) getönt ist und/oder eine transmissionsmindernde Beschichtung auf der Innenscheibe abgeschieden ist und/oder gegebenenfalls die dritte Verbindungsschicht (7) getönt ist.

15. Verbundscheibe nach einem der Ansprüche 1 bis 14, welche eine Fahrzeug-Dachscheibe ist, bevorzugt Dachscheibe eines Elektrofahrzeugs.
